# EUROPEAN PATENT APPLICATION

(11) **EP 3 219 761 A1**
(43) Date of publication of application: **20.09.2017**
(21) Application number: 15858222.1
(22) Date of filing: 29.09.2015
(51) Int. Cl.: C08L 83/07, C08K 3/00, C08K 5/00, C08L 83/06, C09K 5/00, C10M 107/50, C10M 125/26, C10M 139/04, C10N 20/02, C10N 30/00, C10N 40/00, C10N 50/10

(54) **ULTRAVIOLET-THICKENABLE THERMALLY CONDUCTIVE SILICONE GREASE COMPOSITION**

(30) Priority: 11.11.2014 JP 2014228582
(71) Applicant: Shin-Etsu Chemical Co., Ltd., Tokyo 100-0004 (JP)
(72) Inventor: IWATA Mitsuhiro, Annaka-shi Gunma 379-0224 (JP)
(74) Representative: Merkle, Gebhard
(86) International application number: PCT/JP2015/077488
(87) International publication number: WO 2016/076025

(57) **Abstract**

Provided is a one-pack type ultraviolet-thickenable thermally conductive silicone grease composition which, at the initial stage, has a low viscosity (is easy to apply) but has high shape retentivity and which, after curing, is pliable (has low hardness). The ultraviolet-thickenable thermally conductive silicone grease composition comprises, as essential components, (A) an organopolysiloxane having a viscosity at 25°C of 50-100,000 mPa·s and containing at least one alkenyl group in the molecule, (B) a liquid organohydrogenpolysiloxane which has a viscosity at 25°C of 100 mPa·s or less, contains 2-10 silicon-atom-bonded hydrogen atoms in the molecule and contains at least one alkoxy and/or epoxy group bonded to a silicon atom through an alkylene group and in which the polysiloxane has a degree of polymerization of 15 or less and the skeleton of the polysiloxane includes a cyclic structure, (C) a photoactivable platinum complex curing catalyst, and (D) a thermally conductive filler having a thermal conductivity of 10 W/m·°C or greater.

## Description

### TECHNICAL FIELD

This invention relates to a one-part type UV-thickening, heat-conductive silicone grease composition which is efficient to dispense and apply due to a low viscosity, which freely conforms to the shape and contour of a heat-generating electronic part, which has good shape retention in that once the composition assumes a shape, it retains the shape, which has a degree of depth cure adjustable in terms of an exposure dose of UV, and which once thickened by UV irradiation, solidifies soft without hardening so that it may be unlikely to sag even held vertically and avoid applying any extra stress to the heat source.

### BACKGROUND ART

In conjunction with engine control and powertrain systems in transportation vehicles and body systems for controlling air conditioners, the contents of control become more sophisticated and more systems are necessary for control. Accordingly, the number of electronic control units (ECU) mounted is increasing every year. There is a tendency that the number of electronic components mounted inside is increasing. While a plurality of electronic components and parts of different height generate heat, heat-conductive materials are now requisite to efficiently conduct the heat to casings of die-cast aluminum.

Further, since it is recently required to mount more electronic components and parts within a limited space, their mounting environments (e.g., ambient temperature, humidity, angle, and distance) are more diversified. In the case of engine ECU, for example, there are more chances of installing electronic components and parts vertically in the engine room. This suggests more chances of positioning a heat-conductive material vertically in the site where both vibration and high temperature are applied.

While heat-conductive materials are used in such environments, several proposals are made to prevent the heat-conductive material between the heat source and the cooling member from sagging and falling down, for example, use of heat-conductive silicone adhesive materials, heat-conductive potting materials, and room temperature-curable heat-conductive silicone rubber compositions (see JP-A H08-208993, JP-A S61-157569, JP-A 2004-352947, JP 3543663, JP 4255287, and JP 5445415: Patent Documents 1 to 6).

However, since all these materials reach a high hardness and bond to substrates at high bond strength, there are drawbacks that they are least re-workable and apply stresses to the heat-generating electronic components. Also, since the heat-conductive material cannot withstand the repeated stresses due to heat distortion, it may separate from the heat-generating component or crack, leading to a rapid increase of thermal resistance.

Under the circumstances, there was discovered an addition one-part heat-conductive material which has undergone heat crosslinking reaction to a high viscosity (while maintaining flexibility) during its preparation so that the material is sag-controlled (JP-A 2003-301189: Patent Document 7). Since this material is quite flexible despite a high viscosity, its impact of applying stress to the electronic component is weaker than the high-hardness materials. Since this material freely deforms and conforms to an irregular surface, it is suitable to apply to electronic components of different height. However, there is the tradeoff as a matter of course, that is, the problem of difficult coating because of high viscosity.

Recently, a heat-conductive silicone composition having a lower viscosity than the addition one-part heat-conductive material was developed (JP-A 2009-286855: Patent Document 8). Its viscosity is still high. There is a desire to have a heat-conductive silicone composition having better workability and sag control.

The above problem is solved by an addition one-part heat-conductive silicone composition (JP-A 2002-327116: Patent Document 9). That is, this composition is readily dispensable prior to heat curing, has a certain degree of re-working even after heat curing, does not sag after curing, remains as a relatively flexible rubber even after curing, and thus plays the role of a stress relaxing agent. Nevertheless, this addition one-part heat-conductive silicone composition still has a problem to be solved. The problem is that as the addition one-part heat-conductive silicone composition is further reduced in viscosity, the composition becomes flowable so that it may spread over the electronic component immediately after dispensing, failing to establish a heat-dissipating passage if a substantial space is defined between the electronic component and the cooling member.

To solve the problem, a heat-curable, heat-conductive silicone grease composition which has good shape retention despite a low viscosity at the initial and which remains flexible after curing was proposed (JP-A 2013-227374: Patent Document 10). However, in some cases where substrates have poor heat resistance, heat curing is unacceptable. It is thus desired to develop a one-part type heat-conductive silicone composition based on another curing mechanism and having sag control.

As the other curing mechanism, an organopolysiloxane gel composition containing a UV-photoactive platinum complex curing catalyst was proposed (JP 3865638: Patent Document 11). Patent Document 11 refers to the addition of inorganic filler as an optional component, but not to the amount and thermal conductivity of the filler. The organopolysiloxane gel composition is less shelf stable as one-part type.

### PRIOR ART DOCUMENTS

### PATENT DOCUMENTS

- Patent Document 1:: JP-A H08-208993
- Patent Document 2:: JP-A S61-157569
- Patent Document 3:: JP-A 2004-352947
- Patent Document 4:: JP 3543663
- Patent Document 5:: JP 4255287
- Patent Document 6:: JP 5445415
- Patent Document 7:: JP-A 2003-301189
- Patent Document 8:: JP-A 2009-286855
- Patent Document 9:: JP-A 2002-327116
- Patent Document 10:: JP-A 2013-227374
- Patent Document 11:: JP 3865638

### SUMMARY OF THE INVENTION

### PROBLEMS TO BE SOLVED BY THE INVENTION

An object of the invention, which has been made under the above-mentioned circumstances, is to provide a one-part type UV-thickening, heat-conductive silicone grease composition which has good shape retention despite a low viscosity (or ease of coating) at the initial and which remains flexible (or has low hardness) after curing.

### MEANS FOR SOLVING THE PROBLEMS

Making extensive investigations to attain the above object, the inventor has found that when a UV-thickening, heat-conductive silicone grease composition comprising components (A) to (D) and preferably components (E) and/or (F) to be described below is such that it has an absolute viscosity of 30 to 800 Pa·s at 25°C as measured by a Malcom viscometer at a rotational speed of 10 rpm, prior to UV irradiation (i.e., prior to thickening), undergoes a diameter change within 1 mm when the composition is applied onto an aluminum plate so as to form a disk having a diameter of 1 cm (0.5 ml) in a 25°C environment and held horizontal at 25°C for 24 hours, and has a hardness of 1 to 90 as measured by an Asker C type rubber Durometer after thickening by UV irradiation, the composition has good shape retention despite a low viscosity and ease of coating, remains flexible and sag-controlled after curing, is expected to have stress relaxation, and is adherent to substrates and repairable.

Particularly when component (B) used is a liquid organohydrogenpolysiloxane having a viscosity of up to 100 mPa·s at 25°C, containing 2 to 10 silicon-bonded hydrogen atoms per molecule, containing at least one alkoxy and/or epoxy group bonded to a silicon atom through an alkylene group, the polysiloxane having a degree of polymerization of up to 15 and a cyclic structure-containing skeleton, the composition has good shelf stability as one-part type. The invention is predicated on these findings.

Accordingly, the invention provides a UV-thickening, heat-conductive silicone grease composition as defined below.
[1] A UV-thickening, heat-conductive silicone grease composition comprising, as essential components,
   (A) 100 parts by weight of an organopolysiloxane having a viscosity of 50 to 100,000 mPa·s at 25°C and containing at least one alkenyl group per molecule,
   (B) a liquid organohydrogenpolysiloxane having a viscosity of up to 100 mPa·s at 25°C, containing 2 to 10 silicon-bonded hydrogen atoms Si-H groups) per molecule, containing at least one alkoxy and/or epoxy group bonded to a silicon atom through an alkylene group, the polysiloxane having a degree of polymerization of up to 15 and a cyclic structure-containing skeleton, in such an amount that the number of Si-H groups divided by the number of alkenyl groups in the composition may fall in the range from 0.1 to 5.0,
   (C) an effective amount of a photoactive platinum complex curing catalyst selected from the group consisting of trimethyl(acetylacetonato)platinum complex, trimethyl(2,4-pentanedionate)platinum complex, trimethyl(3,5-heptanedionate)platinum complex, trimethyl(methylacetoacetate)platinum complex, bis(2,4-pentanedionato)platinum complex, bis(2,4-hexanedionato)platinum complex, bis(2,4-heptanedionato)platinum complex, bis(3,5-heptanedionato)platinum complex, bis(1-phenyl-1,3-butanedionato)platinum complex, bis(1,3-diphenyl-1,3-propanedionato)platinum complex, (1,5-cyclooctadienyl)dimethyl platinum complex, (1,5-cyclooctadienyl)diphenyl platinum complex, (1,5-cyclooctadienyl)dipropyl platinum complex, (2,5-norbornadiene)dimethyl platinum complex, (2,5-norbornadiene)diphenyl platinum complex, (cyclopentadienyl)dimethyl platinum complex, (methylcyclopentadienyl)diethyl platinum complex, (trimethylsilylcyclopentadienyl)diphenyl platinum complex, (methylcycloocta-1,5-dienyl)diethyl platinum complex, (cyclopentadienyl)trimethyl platinum complex, (cyclopentadienyl)ethyldimethyl platinum complex, (cyclopentadienyl)acetyldimethyl platinum complex, (methylcyclopentadienyl)trimethyl platinum complex, (methylcyclopentadienyl)trihexyl platinum complex, (trimethylsilylcyclopentadienyl)trimethyl platinum complex, (dimethylphenylsilylcyclopentadienyl)triphenyl platinum complex, and (cyclopentadienyl)dimethyltrimethylsilylmethyl platinum complex, and
   (D) 100 to 20,000 parts by weight of a heat-conductive filler having a thermal conductivity of at least 10 W/m·°C.
[2] The UV-thickening, heat-conductive silicone grease composition of [1] wherein component (B) is selected from organohydrogenpolysiloxanes having the general formulae: 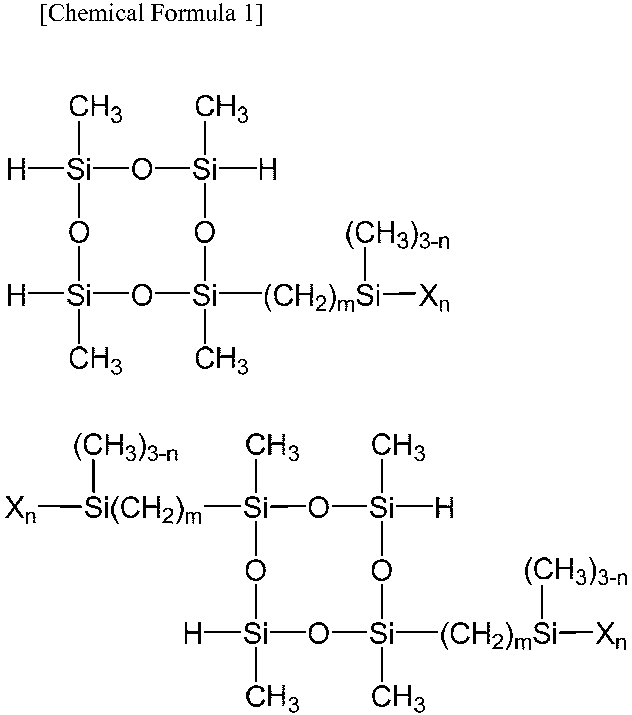 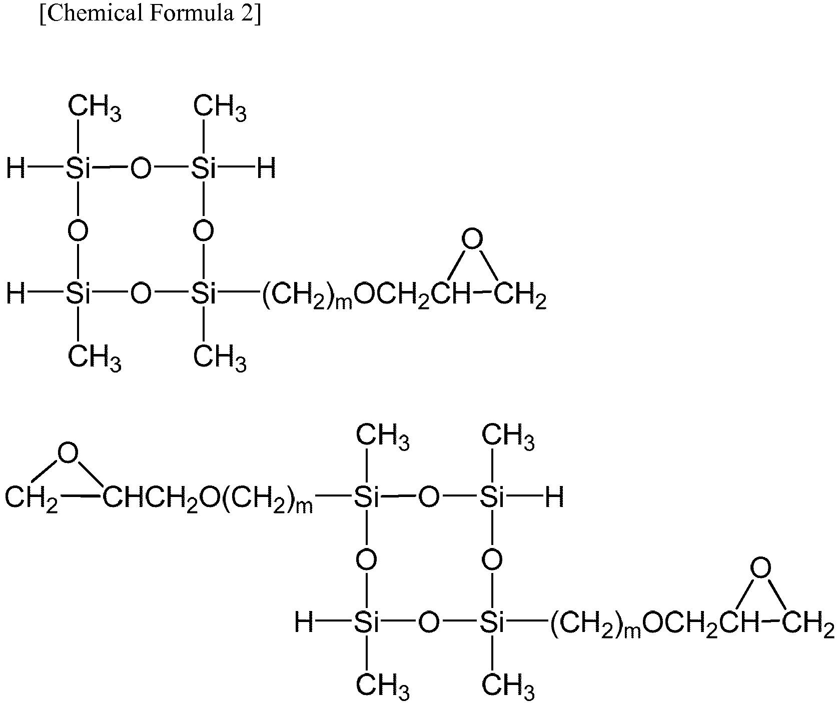 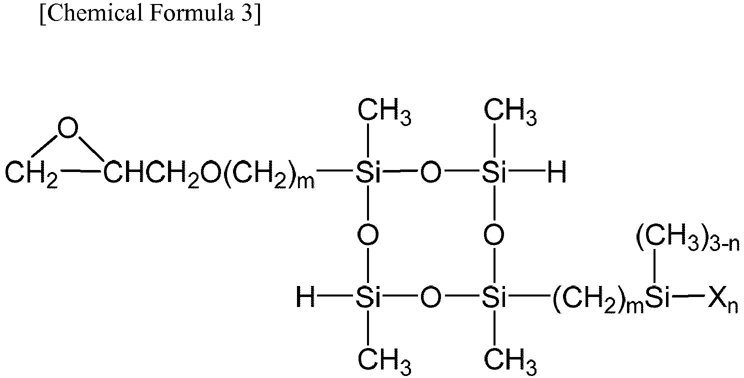 wherein X is a methoxy or ethoxy group, n is 2 or 3, and m is an integer of 1 to 10.
[3] The UV-thickening, heat-conductive silicone grease composition of [1] or [2], further comprising (E) an organopolysiloxane having the general formula (1): 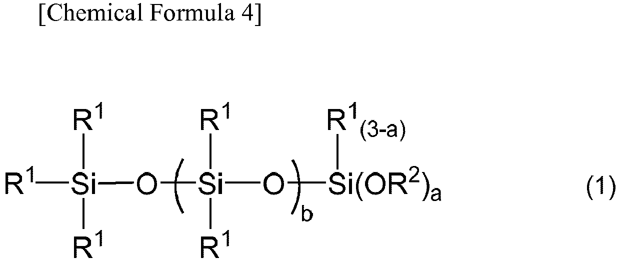 wherein R¹ is independently a substituted or unsubstituted monovalent hydrocarbon group, R² is independently an alkyl, alkoxyalkyl, alkenyl or acyl group, b is an integer of 2 to 100, and a is an integer of 1 to 3, the polysiloxane having a non-cyclic structure skeleton, in an amount of 5 to 900 parts by weight per 100 parts by weight of component (A).
[4] The UV-thickening, heat-conductive silicone grease composition of any one of [1] to [3], further comprising (F) 0.1 to 100 parts by weight of finely divided silica per 100 parts by weight of component (A).
[5] The UV-thickening, heat-conductive silicone grease composition of [4] wherein the finely divided silica as component (F) is surface-treated fumed silica.
[6] The UV-thickening, heat-conductive silicone grease composition of any one of [1] to [5] which exhibits an absolute viscosity of 30 to 800 Pa·s at 25°C as measured by a Malcom viscometer at a rotational speed of 10 rpm, prior to UV irradiation (i.e., prior to thickening), has a shape retention as demonstrated by a diameter change within 1 mm when the composition is applied onto an aluminum plate so as to form a disk having a diameter of 1 cm (0.5 ml) in a 25°C environment and held horizontal at 25°C for 24 hours, and has a hardness of 1 to 90 as measured by an Asker C type rubber Durometer, after thickening by UV irradiation.

### ADVANTAGEOUS EFFECTS OF THE INVENTION

The UV-thickening, heat-conductive silicone grease composition of the invention has a low viscosity sufficient to facilitate dispensing and coating and to freely conform to the shape and contour of a heat-generating electronic component. The composition also has such shape retention that once it is worked into a shape, it may retain the shape unchanged. Further, on thickening by UV irradiation, the composition solidifies to a soft state rather than a hard state and has a good depth-curability. Thus it is sag-controlled when held vertical and applies no extra stresses to the heat source. Moreover it is adherent to substrates, repairable, and shelf stable as one-part type.

### EMBODIMENT FOR CARRYING OUT THE INVENTION

Now the invention is described in detail.

The invention is directed to a UV-thickening, heat-conductive silicone grease composition comprising the following components:
(A) an organopolysiloxane having a viscosity of 50 to 100,000 mPa·s at 25°C and containing at least one alkenyl group per molecule,
(B) a liquid organohydrogenpolysiloxane having a viscosity of up to 100 mPa·s at 25°C, containing 2 to 10 silicon-bonded hydrogen atoms per molecule, containing at least one alkoxy and/or epoxy group bonded to a silicon atom through an alkylene group, the polysiloxane having a degree of polymerization of up to 15 and a cyclic structure-containing skeleton,
(C) a photoactive platinum complex curing catalyst selected from among trimethyl(acetylacetonato)platinum complex, trimethyl(2,4-pentanedionate)platinum complex, trimethyl(3,5-heptanedionate)platinum complex, trimethyl(methylacetoacetate)platinum complex, bis(2,4-pentanedionato)platinum complex, bis(2,4-hexanedionato)platinum complex, bis(2,4-heptanedionato)platinum complex, bis(3,5-heptanedionato)platinum complex, bis(1-phenyl-1,3-butanedionato)platinum complex, bis(1,3-diphenyl-1,3-propanedionato)platinum complex, (1,5-cyclooctadienyl)dimethyl platinum complex, (1,5-cyclooctadienyl)diphenyl platinum complex, (1,5-cyclooctadienyl)dipropyl platinum complex, (2,5-norbornadiene)dimethyl platinum complex, (2,5-norbornadiene)diphenyl platinum complex, (cyclopentadienyl)dimethyl platinum complex, (methylcyclopentadienyl)diethyl platinum complex, (trimethylsilylcyclopentadienyl)diphenyl platinum complex, (methylcycloocta-1,5-dienyl)diethyl platinum complex, (cyclopentadienyl)trimethyl platinum complex, (cyclopentadienyl)ethyldimethyl platinum complex, (cyclopentadienyl)acetyldimethyl platinum complex, (methylcyclopentadienyl)trimethyl platinum complex, (methylcyclopentadienyl)trihexyl platinum complex, (trimethylsilylcyclopentadienyl)trimethyl platinum complex, (dimethylphenylsilylcyclopentadienyl)triphenyl platinum complex, and (cyclopentadienyl)dimethyltrimethylsilylmethyl platinum complex, and
(D) a heat-conductive filler having a thermal conductivity of at least 10 W/m·°C, and preferably further comprising:
(E) an organopolysiloxane having the general formula (1): 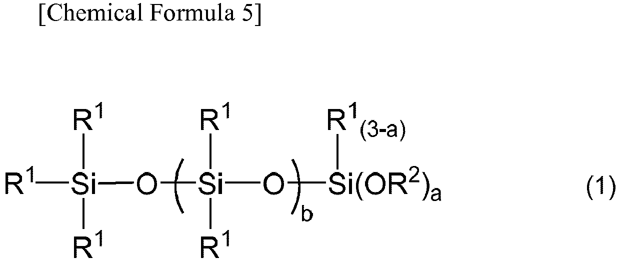 wherein R¹ is independently a substituted or unsubstituted monovalent hydrocarbon group, R² is independently an alkyl, alkoxyalkyl, alkenyl or acyl group, b is an integer of 2 to 100, and a is an integer of 1 to 3, the polysiloxane having a non-cyclic structure skeleton, and/or (F) finely divided silica.

These components are described in detail.

Component (A), which is a base polymer in the present composition, is an organopolysiloxane containing at least one alkenyl group per molecule.

The organopolysiloxane as component (A) contains at least one silicon-bonded alkenyl group, preferably at least 2, and more preferably 2 to 3 silicon-bonded alkenyl groups per molecule. Exemplary alkenyl groups include those of 2 to 4 carbon atoms such as vinyl, allyl and butenyl.

Besides the alkenyl group, silicon-bonded organic groups include substituted or unsubstituted, monovalent hydrocarbon groups of 1 to 10 carbon atoms, free of aliphatic unsaturation. Examples include linear alkyl, branched alkyl, cyclic alkyl, aryl, aralkyl, and haloalkyl groups. Exemplary linear alkyl groups include those of 1 to 10 carbon atoms, preferably 1 to 6 carbon atoms such as methyl, ethyl, propyl, hexyl, octyl, and decyl. Exemplary branched alkyl groups include those of 1 to 10 carbon atoms, preferably 1 to 6 carbon atoms such as isopropyl, isobutyl, tert-butyl, and 2-ethylhexyl. Exemplary cyclic alkyl groups include those of 3 to 10 carbon atoms such as cyclopentyl and cyclohexyl. Exemplary aryl groups include those of 6 to 10 carbon atoms such as phenyl and tolyl. Exemplary aralkyl groups include those of 7 to 10 carbon atoms such as 2-phenylethyl and 2-methyl-2-phenylethyl. Exemplary haloalkyl groups include those of 1 to 10 carbon atoms, preferably 1 to 6 carbon atoms such as 3,3,3-trifluoropropyl, 2-(nonafluorobutyl)ethyl, and 2-(heptadecafluorooctyl)ethyl.

The silicon-bonded organic groups in component (A) are preferably linear alkyl, alkenyl and aryl groups, more preferably C₁-C₆ linear alkyl, alkenyl and aryl groups, and most preferably methyl, vinyl and phenyl.

Component (A) has a viscosity at 25°C in the range of 50 to 100,000 mPa·s, preferably in the range of 200 to 50,000 mPa·s, more preferably in the range of 300 to 40,000 mPa·s, and even more preferably in the range of 300 to 30,000 mPa·s. A viscosity within the range ensures that the present composition is easy to handle and work and a cured product of the composition has satisfactory physical properties. Notably, the viscosity is as measured by a rotational viscometer.

The molecular structure of component (A) is not particularly limited. For example, linear, branched, partially branched linear, and dendritic structures are included, with the linear and partially branched linear structures being preferred. Component (A) may be a homopolymer having such molecular structure, a copolymer having such molecular structure, or a mixture of two or more polymers.

Examples of component (A) include
molecular both end dimethylvinylsiloxy-blocked dimethylpolysiloxane, molecular both end methylphenylvinylsiloxy-blocked dimethylpolysiloxane, molecular both end dimethylvinylsiloxy-blocked dimethylsiloxane/methylphenylsiloxane copolymers,
molecular both end dimethylvinylsiloxy-blocked dimethylsiloxane/methylvinylsiloxane copolymers,
molecular both end silanol-blocked dimethylsiloxane/methylvinylsiloxane copolymers, molecular both end silanol-blocked dimethylsiloxane/methylvinylsiloxane/methylphenylsiloxane copolymers,
molecular both end trimethylsiloxy-blocked dimethylsiloxane/methylvinylsiloxane copolymers,
molecular both end dimethylvinylsiloxy-blocked methyl(3,3,3-trifluoropropyl)polysiloxane, and organosiloxane copolymers consisting of siloxane units of the formula: (CH₃)₃SiO_{1/2}, siloxane units of the formula: (CH₃)₂(CH₂=CH)SiO_{1/2}, siloxane units of the formula: CH₃SiO_{3/2}, and siloxane units of the formula: (CH₃)₂SiO_{2/2}.

It is noted that the organopolysiloxane (A) is essentially composed of siloxane skeleton and is free of alkoxy groups.

Component (B) is an organohydrogenpolysiloxane which serves as a curing agent in the present composition, i.e., which is combined with components (A) and (E) to induce curing. The organohydrogenpolysiloxane cures by UV irradiation and serves as a crosslinker and/or adhesion promoter to impart self-adhesion ability to metals, glass, and organic resins.

Notably, the organohydrogenpolysiloxane is an essential component for improving the shelf stability of the one-part composition.

Component (B) is a liquid organohydrogenpolysiloxane having a viscosity of up to 100 mPa·s at 25°C, containing 2 to 10, preferably 2 to 7, more preferably 2 to 4 silicon-bonded hydrogen atoms per molecule, containing at least one alkoxy and/or epoxy group bonded to a silicon atom through an alkylene group, preferably 2 to 12, more preferably 2 to 6 alkoxy groups bonded to a silicon atom through an alkylene group and/or preferably 1 to 4, more preferably 1 or 2 epoxy groups bonded to a silicon atom through an alkylene group, the polysiloxane having a degree of polymerization of up to 15 and a cyclic structure-containing skeleton.

The viscosity at 25°C of component (B) is up to 100 mPa·s, preferably 1 to 100 mPa·s. If the viscosity at 25°C is too high, it may be difficult to ensure that the present composition is easy to handle and work. Notably, the viscosity is as measured by a rotational viscometer.

Component (B) is not particularly limited as long as it has the structure defined above. The organohydrogenpolysiloxane should have a degree of polymerization of up to 15, preferably 4 to 15, and more preferably 4 to 8. If the degree of polymerization is more than 15, adhesion is poor. The organohydrogenpolysiloxane preferably has a cyclic structure of 3 to 8 silicon atoms, more preferably 4 silicon atoms. If the polysiloxane is not of cyclic siloxane structure, workability, adhesion and heat resistance are insufficient.

Notably, the degree of polymerization (or the number of silicon atoms per molecule) may be determined as a number average value by gas chromatography/mass spectrometry (GC/MS) or gel permeation chromatography (GPC) analysis versus polystyrene standards.

Examples of component (B) containing an alkoxy group bonded to a silicon atom through an alkylene group include organohydrogenpolysiloxanes as shown below. 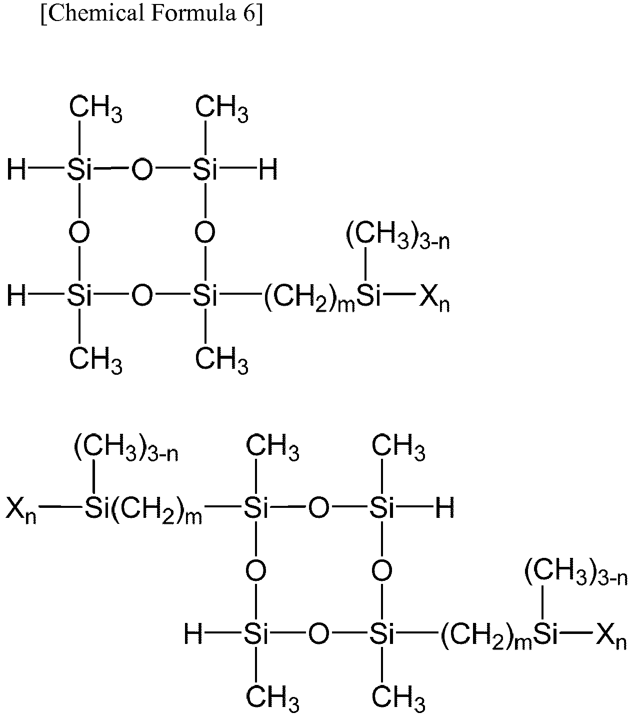 Herein X is methoxy or ethoxy, m is an integer of 1 to 10, preferably 1 to 3, and more preferably 2 or 3, and n is 2 or 3.

Examples of component (B) containing an epoxy group bonded to a silicon atom through an alkylene group include organohydrogenpolysiloxanes as shown below. 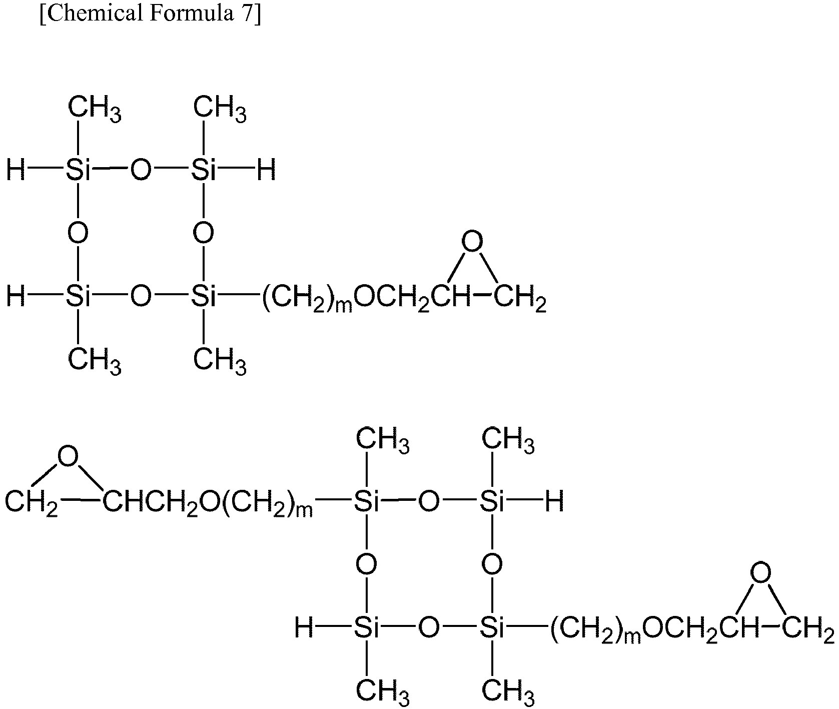 Herein m is an integer of 1 to 10, preferably 1 to 3, and more preferably 2 or 3.

Exemplary of component (B) containing an alkoxy group and an epoxy group each bonded to a silicon atom through an alkylene group are organohydrogenpolysiloxanes as shown below. 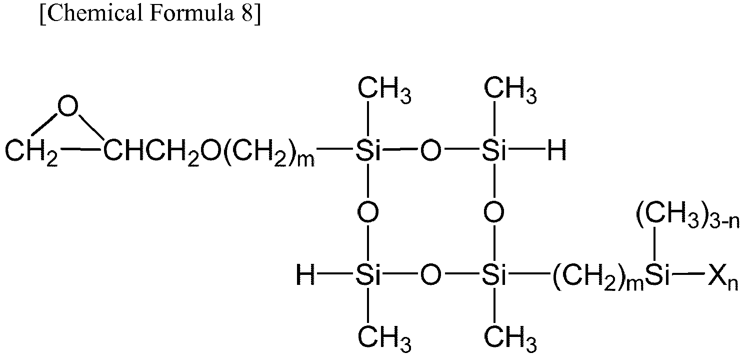 Herein X is methoxy or ethoxy, m is an integer of 1 to 10, preferably 1 to 3, and more preferably 2 or 3, and n is 2 or 3.

These compounds may be used alone or in admixture of two or more as component (B).

The organohydrogenpolysiloxane as component (B) is used such that the amount of silicon-bonded hydrogen atoms (i.e., Si-H groups) in component (B) is 0.1 to 5.0 moles, preferably 0.1 to 3.0 moles, and more preferably 0.1 to 1.5 moles per mole of silicon-bonded alkenyl groups in the composition, specifically component (A) and component (E) to be described below. As long as the amount is in the range, the present composition is effectively curable to an adequate hardness, with a minimized likelihood of applying stresses to the heat-dissipating component.

Component (C) used herein is a photoactive platinum complex curing catalyst, which exerts a catalytic action of promoting addition reaction of component (B) to components (A) and (E) when activated upon UV irradiation. The compound used as the photoactive platinum complex curing catalyst (C) is a β-diketone platinum complex or a platinum complex having a cyclic diene compound as ligand.

Examples of the β-diketone platinum complex include
trimethyl(acetylacetonato)platinum complex, trimethyl(2,4-pentanedionate)platinum complex, trimethyl(3,5-heptanedionate)platinum complex, trimethyl(methylacetoacetate)platinum complex, bis(2,4-pentanedionato)platinum complex, bis(2,4-hexanedionato)platinum complex, bis(2,4-heptanedionato)platinum complex, bis(3,5-heptanedionato)platinum complex, bis(1-phenyl-1,3-butanedionato)platinum complex, and bis(1,3-diphenyl-1,3-propanedionato)platinum complex.

Examples of the platinum complex having a cyclic diene compound as ligand include (1,5-cyclooctadienyl)dimethyl platinum complex, (1,5-cyclooctadienyl)diphenyl platinum complex, (1,5-cyclooctadienyl)dipropyl platinum complex, (2,5-norbornadiene)dimethyl platinum complex, (2,5-norbornadiene)diphenyl platinum complex, (cyclopentadienyl)dimethyl platinum complex, (methylcyclopentadienyl)diethyl platinum complex, (trimethylsilylcyclopentadienyl)diphenyl platinum complex, (methylcycloocta-1,5-dienyl)diethyl platinum complex, (cyclopentadienyl)trimethyl platinum complex, (cyclopentadienyl)ethyldimethyl platinum complex, (cyclopentadienyl)acetyldimethyl platinum complex, (methylcyclopentadienyl)trimethyl platinum complex, (methylcyclopentadienyl)trihexyl platinum complex, (trimethylsilylcyclopentadienyl)trimethyl platinum complex, (dimethylphenylsilylcyclopentadienyl)triphenyl platinum complex, and (cyclopentadienyl)dimethyltrimethylsilylmethyl platinum complex.

Component (C) is used in a catalytic or effective amount. Specifically, component (C) is used in such an amount as to give 1 to 5,000 ppm, preferably 10 to 500 ppm of platinum metal based on the total weight of components (A), (B), and (E) to be described below. In an amount of less than 1 ppm, the composition may be substantially retarded in addition reaction upon UV irradiation or may not cure. In an amount of more than 5,000 ppm, the composition may lose one-part shelf stability or the cured product may have less heat resistance.

In the practice of the invention, (G) an inhibitor may be used for the purpose of suppressing the catalytic activity of component (C) and further improving the one-part shelf stability. The inhibitor serves to suppress the progress of hydrosilylation reaction at a storage temperature of room temperature (25°C) or below for thereby prolonging the shelf life and pot life. The inhibitor may be selected from well-known reaction inhibitors. For example, acetylene compounds, nitrogen compounds, and organic phosphorus compounds are useful. Examples include acetylene compounds such as 1-ethynyl-1-cyclohexanol and 3-butyn-1-ol, nitrogen compounds such as triallyl isocyanurate and triallyl isocyanurate derivatives, and organic phosphorus compounds such as triphenylphosphine.

The amount of component (G) used is preferably 0.01 to 1.5 parts, more preferably 0.01 to 1.0 part by weight per 100 parts by weight of component (A). Less than 0.01 part by weight of component (G) may fail to achieve the desired shelf life or pot life whereas more than 1.5 parts by weight may adversely affect the UV-thickening behavior.

Component (G) may be diluted with a solvent such as toluene, prior to use, in order to facilitate its dispersion in the silicone grease composition.

Component (D) is a heat-conductive filler. If the thermal conductivity of the filler is less than 10 W/m·°C, the present composition has a lower thermal conductivity. Thus the heat-conductive filler should have a thermal conductivity of at least 10 W/m·°C, preferably at least 15 W/m·°C.

Suitable heat-conductive fillers include aluminum powder, copper powder, silver powder, nickel powder, gold powder, alumina powder, zinc oxide powder, magnesium oxide powder, aluminum nitride powder, boron nitride powder, silicon nitride powder, diamond powder, and carbon powder. As long as their thermal conductivity is at least 10 W/m·°C, any desired fillers may be used alone or in admixture of two or more.

The average particle size of the heat-conductive filler is preferably in a range of 0.1 to 300 µm, more preferably 0.1 to 200 µm. If the average particle size is less than 0.1 µm, the present composition may not become greasy and lose extensibility. With an average particle size in excess of 300 µm, the present composition may lose uniformity. The shape of the filler may be irregular, spherical or otherwise. Notably the average particle size may be determined, for example, as a weight average value (or median diameter) by the laser light diffraction method.

The amount of the heat-conductive filler loaded as component (D) is in a range of 100 to 20,000 parts, preferably 500 to 15,000 parts by weight per 100 parts by weight of component (A). Less than 100 parts of the filler fails to gain the desired thermal conductivity. If the amount is more than 20,000 parts, the present composition does not become greasy and loses extensibility.

Component (E) is an organopolysiloxane of the general formula (1), preferably having a viscosity of 5 to 100,000 mPa·s at 25°C, and having a non-cyclic structure skeleton. Component (E) plays the important role of maintaining the composition as UV-thickened at a low hardness and reducing its initial viscosity. 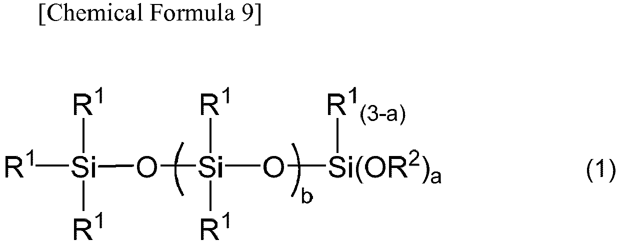 Herein R¹ is independently a substituted or unsubstituted monovalent hydrocarbon group, R² is independently an alkyl, alkoxyalkyl, alkenyl or acyl group, b is an integer of 2 to 100, and a is an integer of 1 to 3.

In formula (1), R¹ is independently a substituted or unsubstituted monovalent hydrocarbon group, preferably of 1 to 10 carbon atoms. Examples include linear alkyl, branched alkyl, cyclic alkyl, alkenyl, aryl, aralkyl, and haloalkyl groups. Exemplary linear alkyl groups include those of 1 to 10 carbon atoms such as methyl, ethyl, propyl, hexyl, octyl, and decyl. Exemplary branched alkyl groups include those of 1 to 10 carbon atoms such as isopropyl, isobutyl, tert-butyl, and 2-ethylhexyl. Exemplary cyclic alkyl groups include those of 3 to 10 carbon atoms such as cyclopentyl and cyclohexyl. Exemplary alkenyl groups include those of 2 to 10 carbon atoms such as vinyl and allyl. Exemplary aryl groups include those of 6 to 10 carbon atoms such as phenyl and tolyl. Exemplary aralkyl groups include those of 7 to 10 carbon atoms such as 2-phenylethyl and 2-methyl-2-phenylethyl. Exemplary haloalkyl groups include those of 1 to 10 carbon atoms such as 3,3,3-trifluoropropyl, 2-(nonafluorobutyl)ethyl, and 2-(heptadecafluorooctyl)ethyl. R¹ is preferably a C₁-C₆ monovalent hydrocarbon group, more preferably C₁-C₃ alkyl or aryl, and more preferably methyl or phenyl.

R² is independently an alkyl, alkoxyalkyl, alkenyl or acyl group. Exemplary alkyl groups include linear alkyl, branched alkyl, and cyclic alkyl groups as exemplified for R¹. Exemplary alkoxyalkyl groups include those of 2 to 10 carbon atoms such as methoxyethyl and methoxypropyl. Exemplary alkenyl groups include those exemplified for R¹. Exemplary acyl groups include those of 2 to 10 carbon atoms such as acetyl and octanoyl. Preferably R² is alkyl, with methyl and ethyl being most preferred.

The subscript b is an integer of 2 to 100, preferably 10 to 50, and a is an integer of 1 to 3, preferably 3.

Typically, component (E) has a viscosity at 25°C of 5 to 100,000 mPa·s, preferably 5 to 5,000 mPa·s. If the viscosity is less than 5 mPa·s, the resulting silicone grease composition may tend to exert oil bleeding and to sag. If the viscosity exceeds 100,000 mPa·s, the resulting silicone grease composition may significantly lose fluidity and become poor in coating operation. Notably, the viscosity is as measured by a rotational viscometer.

Preferred examples of component (E) are given below. 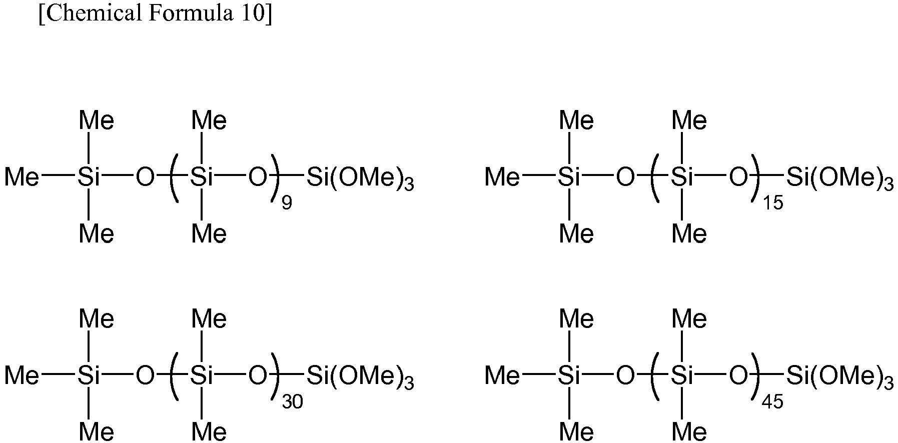 Herein Me stands for methyl.

The amount of component (E), if compounded, is preferably 5 to 900 parts, more preferably 10 to 900 parts, and even more preferably 20 to 700 parts by weight per 100 parts by weight of component (A). If the amount of component (E) is less than 5 parts by weight, the composition may become hard, i.e., may not remain flexible, after heating. If the amount of component (E) exceeds 900 parts by weight, the composition may be difficult to cure.

Notably, in the practice of the invention, it is acceptable to use an organopolysiloxane free of silicon-bonded alkenyl in addition to the foregoing components (A) and (E). Examples of the additional organopolysiloxane include molecular both end silanol-blocked dimethylpolysiloxane, molecular both end silanol-blocked dimethylsiloxane/methylphenylsiloxane copolymers, molecular both end trimethoxysiloxy-blocked dimethylpolysiloxane, molecular both end trimethoxysiloxy-blocked dimethylsiloxane/methylphenylsiloxane copolymers,
molecular both end methyldimethoxysiloxy-blocked dimethylpolysiloxane, molecular both end triethoxysiloxy-blocked dimethylpolysiloxane, molecular both end trimethoxysilylethyl-blocked dimethylpolysiloxane, and mixtures of two or more of the foregoing.

Component (F) is finely divided silica for imparting shape retention to the composition. As the finely divided silica, surface-treated fumed silica is preferably used. The surface treatment improves the dispersion of silica in components (A), (B) and (E) and enables uniform dispersion. Also the mutual action of surface-treated fumed silica and the interaction of surface-treated fumed silica and components (A), (B) and (E) impart shape retention.

Effective surface treating agents include chlorosilanes, silazanes, and siloxanes. Exemplary of the surface treating agent are methyltrichlorosilane, dimethyldichlorosilane, trimethylchlorosilane, hexamethyldisilazane, octamethylcyclotetrasiloxane, and α,ω-trimethylsilyldimethylpolysiloxane.

Also component (F) should preferably have a specific surface area (BET method) of at least 50 m²/g, more preferably at least 100 m²/g. With a surface area of less than 50 m²/g, the present composition may have poor shape retention. The specific surface area (BET method) is preferably up to 500 m²/g, more preferably up to 300 m²/g, because shape retention is enhanced.

The amount of component (F), if compounded, is preferably 0.1 to 100 parts, more preferably 1 to 80 parts, and even more preferably 1 to 50 parts by weight per 100 parts by weight of component (A). If component (F) is less than 0.1 part by weight, the composition may lose shape retention. If component (F) is more than 100 parts, the composition may not become greasy and may lose extensibility.

Besides the above components, any well-known additives may be added to the UV-thickening, heat-conductive silicone grease composition insofar as the objects of the invention are not impaired. Suitable additives include, for example, hindered phenol based antioxidants, reinforcing and non-reinforcing fillers such as calcium carbonate, and thixotropic agents such as polyethers. If necessary, colorants such as pigments and dyes may be added.

Also, besides components (A) to (F), (H) an adhesion promoter, for example, silane coupling agents as shown below may be added in order to make the composition bondable to various adherends insofar the objects of the invention are not impaired. Notably, the adhesion promoter (H) is different from component (B) in that it does not contain any SiH group. The amount of the adhesion promoter, if used, is preferably 0.1 to 20 parts by weight per 100 parts by weight of component (A). 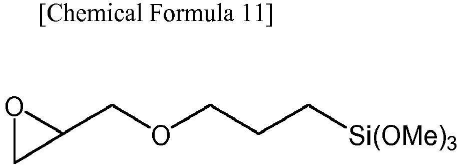 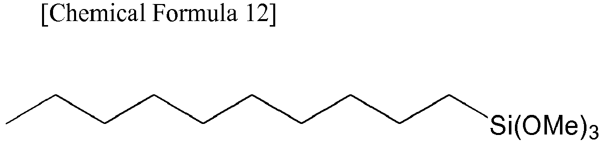 Herein Me stands for methyl.

The UV-thickening, heat-conductive silicone grease composition of the invention may be prepared by mixing the above components by a well-known method until uniform.

The UV-thickening, heat-conductive silicone grease composition thus obtained should preferably have an absolute viscosity at 25°C of 30 to 800 Pa·s, more preferably 30 to 600 Pa·s, as measured by a Malcom viscometer at a rotational speed of 10 rpm. If the viscosity is less than 30 Pa·s, the dispensability of the composition is too high and not adjustable. If the viscosity exceeds 800 Pa·s, the composition may not be effectively dispensable. Notably the initial viscosity of the UV-thickening, heat-conductive silicone grease composition can be set within the range by adjusting the balance of components (A) and (B).

When the UV-thickening, heat-conductive silicone grease composition is applied onto an aluminum plate so as to form a disk having a diameter of 1 cm (0.5 ml) in a 25°C environment and the disk is held horizontal at 25°C for 24 hours, the composition should preferably undergo a diameter change within 1 mm, especially within 0.5 mm. A diameter change in excess of 1 mm may indicate a shortage of shape retention. In order that the UV-thickening, heat-conductive silicone grease composition undergo a diameter change within 1 mm under the above conditions, it is recommended that the amount of component (F) added be 0.1 to 100 parts by weight per 100 parts by weight of component (A).

Since the UV-thickening, heat-conductive silicone grease composition of the invention has a low viscosity at the initial, it may deform freely in conformity with the contour (recesses and bosses). Since the composition has shape retention ability, it can retain the shape after deformation. Because of a low viscosity and shape retention ability, even when a heat-generating part is of complex shape, the composition can readily conform to every corner and retain its shape.

Unlike conventional heat-conductive silicone adhesive materials, heat-conductive silicone potting materials and room temperature-curable, heat-conductive silicone rubber compositions, the UV-thickening, heat-conductive silicone grease composition of the invention is characterized by soft-curing (thickening) on UV irradiation.

With respect to UV exposure conditions for the UV-thickening, heat-conductive silicone grease composition of the invention to thicken (soft-cure), for example, when the composition is thickened (soft-cured) at a thickness of 1 mm, the dose of exposure energy is preferably at least 2,000 mJ/cm², more preferably at least 5,000 mJ/cm².

Suitable UV sources used for thickening (soft-curing) the UV-thickening, heat-conductive silicone grease composition of the invention include typical mercury vapor lamps and metal halide lamps designed to emit UV energy in various UV wavelength ranges, for example, an LED lamp capable of emitting light at a specific single wavelength of 365 nm.

The UV wavelength range used for thickening (soft-curing) the UV-thickening, heat-conductive silicone grease composition is desirably 220 to 450 nm.

It is noted that the UV-thickening, heat-conductive silicone grease composition of the invention, after UV irradiation, has a hardness at 25°C of preferably 1 to 90, more preferably 10 to 80, as measured by an Asker C type rubber Durometer. If the hardness is less than the range, the composition may be too soft and sag. If the hardness is above the range, the composition may be too hard and apply a stress to the heat source. The hardness of the UV-thickening, heat-conductive silicone grease composition as cured may be set within the range by adjusting the number of Si-H groups in component (B) divided by the total number of alkenyl groups in components (A) and (E).

Since the UV-thickening, heat-conductive silicone grease composition thus obtained remains soft even after curing, it is anti-sagging and effectively repairable, and eliminates any concern of applying substantial stresses to electronic components.

### EXAMPLES

Examples and Comparative Examples are given below for illustrating the invention, but the invention is not limited thereto. Examples are shown for the purpose of more clearly demonstrating the superiority of the invention. In the formulae below, Me stands for methyl.

First, the following components were provided.

### Component (A)

A-1: dimethylpolysiloxane blocked at both ends with dimethylvinylsilyl and having a viscosity of 600 mPa·s at 25°C
A-2: dimethylpolysiloxane blocked at both ends with dimethylvinylsilyl and having a viscosity of 30,000 mPa·s at 25°C

### Component (B)

B-1: organohydrogenpolysiloxane of the following formula having a viscosity of 5 mPa·s at 25°C 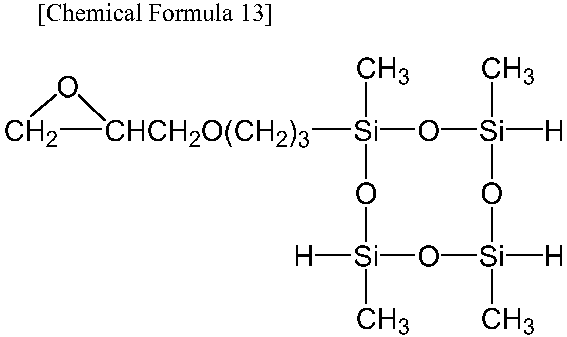
B-2: organohydrogenpolysiloxane of the following formula having a viscosity of 5 mPa·s at 25°C 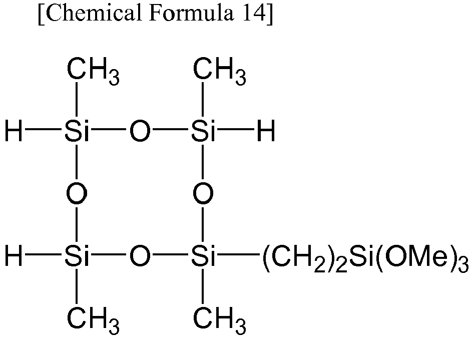
B-3: organohydrogenpolysiloxane of the following formula having a viscosity of 12 mPa·s at 25°C 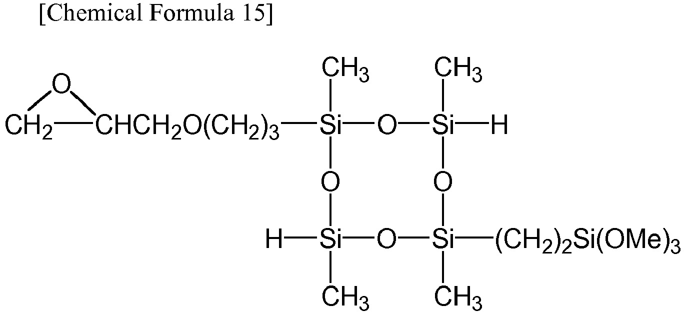
B-4: organohydrogenpolysiloxane of the following formula having a viscosity of 8 mPa·s at 25°C (for comparison) 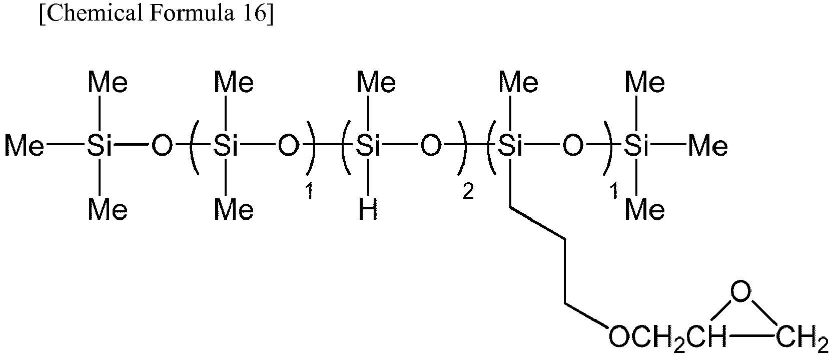
B-5: organohydrogenpolysiloxane of the following formula having a viscosity of 25 mPa·s at 25°C (for comparison)

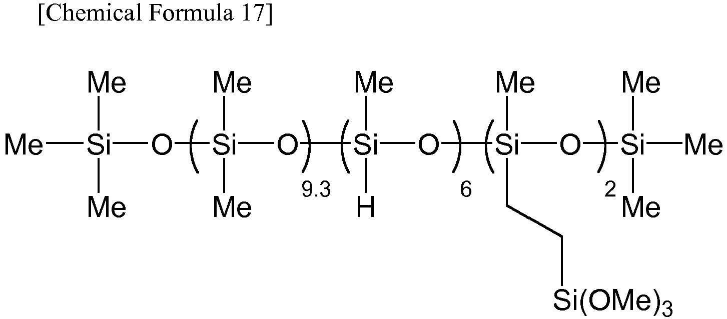

### Component (C)

C-1: 1 wt% solution of bis(2,4-pentanedionato)platinum complex in 2-(2-butoxyethoxy)ethyl acetate
C-2: chloroplatinic acid-1,3-divinyltetramethyldisiloxane complex (for comparison) prepared in the same platinum concentration as C-1

### Component (D)

D-1: alumina powder with an average particle size of 10 µm (thermal conductivity 27 W/m·°C)
D-2: aluminum powder with an average particle size of 12 µm (thermal conductivity 236 W/m·°C)

### Component (E)

E-1: organopolysiloxane of the following formula

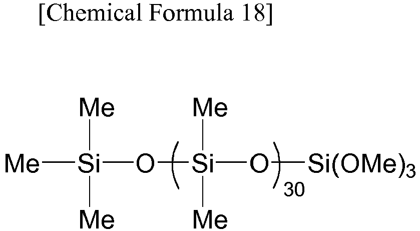

### Component (F)

F-1: fumed silica having a BET specific surface area of 120 m²/g and made hydrophobic by surface treatment with dimethyldichlorosilane

### [Examples 1 to 7 and Comparative Examples 1 to 3]

Compositions of Examples 1 to 7 and Comparative Examples 1 to 3 were prepared by mixing the above components (A) to (F) in the amounts shown in Table 1. Specifically, the amounts shown in Table 1 of components (A), (D) and (E) were fed into a 5-L gate mixer (trade name: 5-L Planetary Mixer by Inoue Mfg., Inc.) where the contents were deaerated, heated, and mixed at 150°C for 2 hours. Thereafter, the contents were cooled to room temperature (25°C), components (B) and (F) were added thereto, and the contents were mixed at room temperature (25°C) until uniform. Further, component (C) was added thereto, and the contents were deaerated and mixed at room temperature until uniform. The compositions thus obtained were evaluated for initial viscosity, cured hardness, thermal conductivity, shape retention, and shelf stability by the following methods. The results are also shown in Table 1. The composition of Comparative Example 1 could not be evaluated for these properties because it thickened and gelled immediately after addition of component (C).

### [Initial viscosity test]

The initial viscosity of the UV-thickening, heat-conductive silicone grease composition is a value at 25°C as measured by a Malcom viscometer (type PC-10AA, rotational speed 10 rpm).

### [Cured hardness test]

The UV-thickening, heat-conductive silicone grease composition was applied onto a glass plate, overlaid with a glass plate so as to provide a cured thickness of 1 mm, and exposed to UV using a conveyor type UV exposure unit equipped with a high-pressure mercury lamp (80 W/cm) by Japan Battery Co., Ltd. under UV exposure conditions: a distance between the lamp and the sample to be exposed of 10 cm and a conveyor moving speed or sample speed of 1 m/min. The step of passing the sample under the lamp was performed four times. The glass plates were then removed, yielding a cured product. The cured product was measured for hardness at 25°C by an Asker C type rubber Durometer. The dose of exposure energy was 2,000 mJ/cm² as monitored at 365 nm by a UV meter (UV meter UIT-102 by Ushio Inc.).

### [Thermal conductivity test]

The thermal conductivity of the UV-thickening, heat-conductive silicone grease composition prior to curing was measured at 25°C using a hot disk method thermal property meter TPA-501 (Kyoto Electronics Mfg. Co., Ltd.).

### [Shape retention test]

In a 25°C environment, 0.5 ml of the UV-thickening, heat-conductive silicone grease composition was applied onto an aluminum plate to form a disk having a diameter of about 1 cm. The disk was held at 25°C for one day (24 hours) immediately after the completion of application, and measured for its diameter. A change of diameter (mm) was computed and used as an index of shape retention. The less the moving distance, the better is shape retention.

### [Shelf stability test]

The drying time in a 25°C environment was determined while confirming the dry state with finger touch. The longer the drying time, the better is one-part shelf stability.

**[Table 1]**

| Formulation (pbw) | | Example | | | | | | | Comparative Example | | |
|---|---|---|---|---|---|---|---|---|---|---|---|
| | | 1 | 2 | 3 | 4 | 5 | 6 | 7 | 1 | 2 | 3 |
| Component (A) | A-1 | 75 | 75 | 75 | 75 | 75 | 75 | 75 | 75 | 75 | 75 |
| | A-2 | 10 | 10 | 10 | 10 | 10 | 10 | 10 | 10 | 10 | 10 |
| Component (B) | B-1 | 1.1 | 0 | 0 | 1.1 | 0 | 0 | 0 | 0 | 0 | 0 |
| | B-2 | 0 | 1.2 | 0 | 0 | 1.2 | 0 | 0 | 0 | 0 | 0 |
| | B-3 | 0 | 0 | 2.6 | 0 | 0 | 2.6 | 2.6 | 2.6 | 0 | 0 |
| | B-4 | 0 | 0 | 0 | 0 | 0 | 0 | 0 | 0 | 1.9 | 0 |
| | B-5 | 0 | 0 | 0 | 0 | 0 | 0 | 0 | 0 | 0 | 1.8 |
| Component (C) | C-1 | 1.2 | 1.2 | 1.2 | 1.2 | 1.2 | 1.2 | 1.2 | 0 | 1.2 | 1.2 |
| | C-2 | 0 | 0 | 0 | 0 | 0 | 0 | 0 | 0.6 | 0 | 0 |
| Component (D) | D-1 | 1,000 | 1,000 | 1,000 | 0 | 0 | 0 | 1,000 | 1,000 | 1,000 | 1,000 |
| | D-2 | 0 | 0 | 0 | 600 | 600 | 600 | 0 | 0 | 0 | 0 |
| Component (E) | E-1 | 15 | 15 | 15 | 15 | 15 | 15 | 15 | 15 | 15 | 15 |
| Component (F) | F-1 | 0 | 0 | 2.5 | 0 | 0 | 2.5 | 0 | 0 | 0 | 0 |
| Si-H/Si-Vi (mol/mol) | | 0.8 | 0.8 | 1.0 | 0.8 | 0.8 | 1.0 | 1.0 | 1.0 | 1.0 | 0.6 |

| Test results | | | | | | | | | | | |
|---|---|---|---|---|---|---|---|---|---|---|---|
| Initial viscosity (Pa·s) | | 85 | 79 | 98 | 71 | 65 | 90 | 81 | - | 96 | 92 |
| Thermal conductivity (W/m·°C) | | 2.9 | 2.9 | 2.8 | 2.9 | 2.9 | 2.8 | 2.8 | - | 2.9 | 2.9 |
| Cured hardness (Asker C) | | 31 | 30 | 27 | 21 | 20 | 16 | 24 | - | 35 | 33 |
| Shape retention (mm) | | 0.2 | 0.2 | 0 | 0.3 | 0.3 | 0 | 0.1 | - | 0.2 | 0.1 |
| Shelf stability (day) | | ≥180 | ≥180 | ≥180 | ≥120 | ≥120 | ≥120 | ≥180 | - | <1 | <1 |

## Claims

1. A UV-thickening, heat-conductive silicone grease composition comprising, as essential components,
(A) 100 parts by weight of an organopolysiloxane having a viscosity of 50 to 100,000 mPa·s at 25°C and containing at least one alkenyl group per molecule,
(B) a liquid organohydrogenpolysiloxane having a viscosity of up to 100 mPa·s at 25°C, containing 2 to 10 silicon-bonded hydrogen atoms (Si-H groups) per molecule, containing at least one alkoxy and/or epoxy group bonded to a silicon atom through an alkylene group, the polysiloxane having a degree of polymerization of up to 15 and a cyclic structure-containing skeleton, in such an amount that the number of Si-H groups divided by the number of alkenyl groups in the composition may fall in the range from 0.1 to 5.0,
(C) an effective amount of a photoactive platinum complex curing catalyst selected from the group consisting of trimethyl(acetylacetonato)platinum complex, trimethyl(2,4-pentanedionate)platinum complex, trimethyl(3,5-heptanedionate)platinum complex, trimethyl(methylacetoacetate)platinum complex, bis(2,4-pentanedionato)platinum complex, bis(2,4-hexanedionato)platinum complex, bis(2,4-heptanedionato)platinum complex, bis(3,5-heptanedionato)platinum complex, bis(1-phenyl-1,3-butanedionato)platinum complex, bis(1,3-diphenyl-1,3-propanedionato)platinum complex, (1,5-cyclooctadienyl)dimethyl platinum complex, (1,5-cyclooctadienyl)diphenyl platinum complex, (1,5-cyclooctadienyl)dipropyl platinum complex, (2,5-norbornadiene)dimethyl platinum complex, (2,5-norbornadiene)diphenyl platinum complex, (cyclopentadienyl)dimethyl platinum complex, (methylcyclopentadienyl)diethyl platinum complex, (trimethylsilylcyclopentadienyl)diphenyl platinum complex, (methylcycloocta-1,5-dienyl)diethyl platinum complex, (cyclopentadienyl)trimethyl platinum complex, (cyclopentadienyl)ethyldimethyl platinum complex, (cyclopentadienyl)acetyldimethyl platinum complex, (methylcyclopentadienyl)trimethyl platinum complex, (methylcyclopentadienyl)trihexyl platinum complex, (trimethylsilylcyclopentadienyl)trimethyl platinum complex, (dimethylphenylsilylcyclopentadienyl)triphenyl platinum complex, and (cyclopentadienyl)dimethyltrimethylsilylmethyl platinum complex, and
(D) 100 to 20,000 parts by weight of a heat-conductive filler having a thermal conductivity of at least 10 W/m·°C.

2. The UV-thickening, heat-conductive silicone grease composition of claim 1 wherein component (B) is selected from organohydrogenpolysiloxanes having the general formulae: 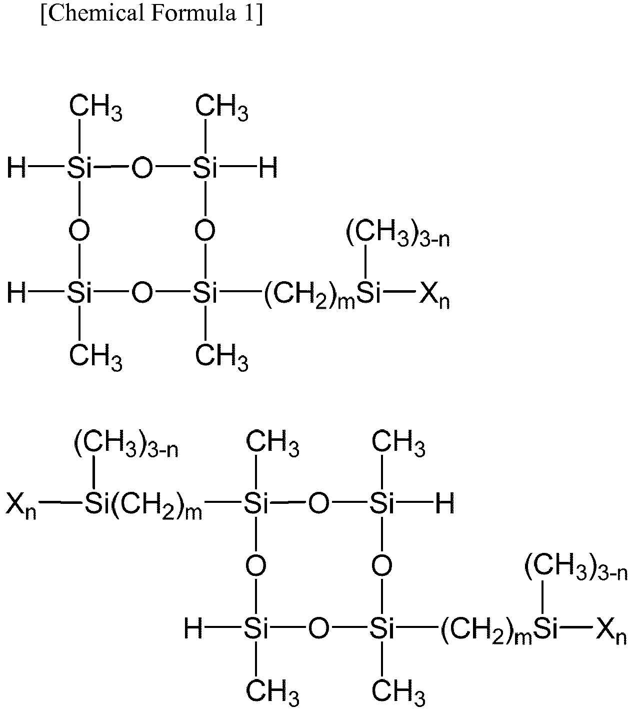 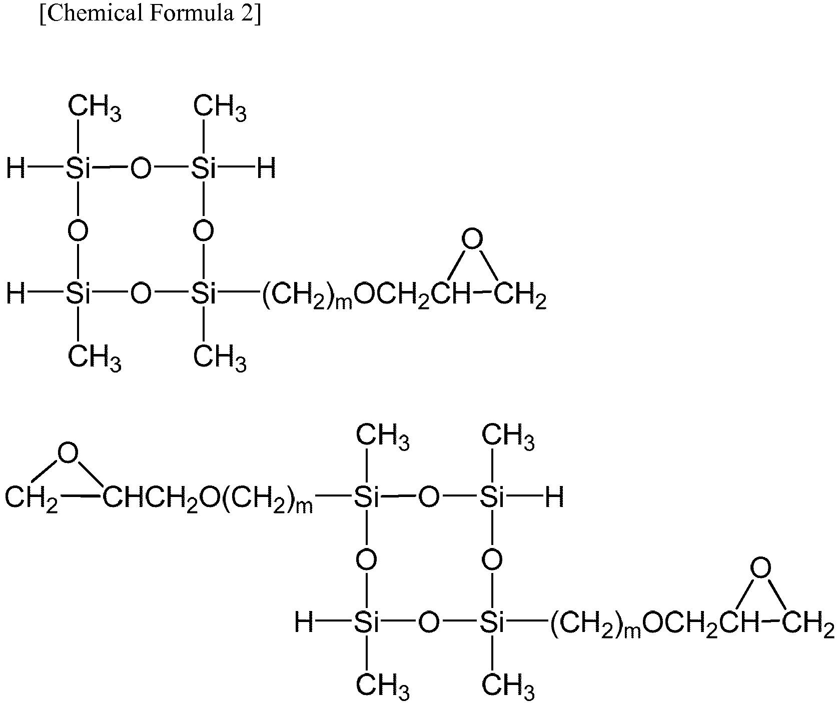 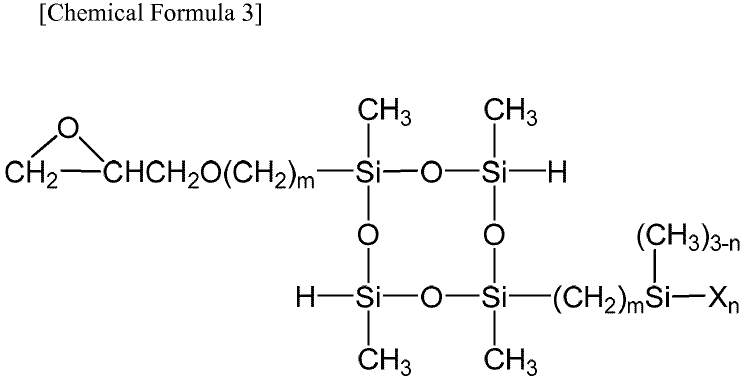 wherein X is a methoxy or ethoxy group, n is 2 or 3, and m is an integer of 1 to 10.

3. The UV-thickening, heat-conductive silicone grease composition of claim 1 or 2, further comprising (E) an organopolysiloxane having the general formula (1): 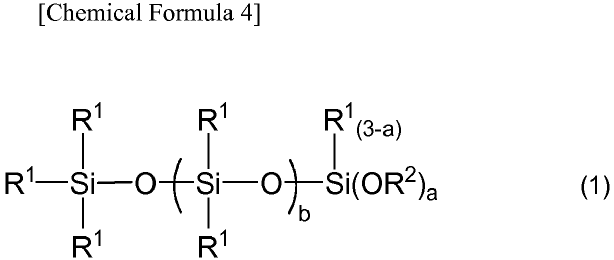 wherein R¹ is independently a substituted or unsubstituted monovalent hydrocarbon group, R² is independently an alkyl, alkoxyalkyl, alkenyl or acyl group, b is an integer of 2 to 100, and a is an integer of 1 to 3, the polysiloxane having a non-cyclic structure skeleton, in an amount of 5 to 900 parts by weight per 100 parts by weight of component (A).

4. The UV-thickening, heat-conductive silicone grease composition of any one of claims 1 to 3, further comprising (F) 0.1 to 100 parts by weight of finely divided silica per 100 parts by weight of component (A).

5. The UV-thickening, heat-conductive silicone grease composition of claim 4 wherein the finely divided silica as component (F) is surface-treated fumed silica.

6. The UV-thickening, heat-conductive silicone grease composition of any one of claims 1 to 5 which exhibits an absolute viscosity of 30 to 800 Pa·s at 25°C as measured by a Malcom viscometer at a rotational speed of 10 rpm, prior to UV irradiation (i.e., prior to thickening), has a shape retention as demonstrated by a diameter change within 1 mm when the composition is applied onto an aluminum plate so as to form a disk having a diameter of 1 cm (0.5 ml) in a 25°C environment and held horizontal at 25°C for 24 hours, and has a hardness of 1 to 90 as measured by an Asker C type rubber Durometer, after thickening by UV irradiation.
